# EUROPÄISCHE PATENTSCHRIFT

(11) **EP 1 063 395 B1**
(45) Veröffentlichungstag und Bekanntmachung des Hinweises auf die Patenterteilung: **24.09.2003**
(21) Anmeldenummer: 00111044.4
(22) Anmeldetag: 31.05.2000
(51) Int. Cl.: F01N 3/08, F01N 3/20

(54) **Abgasdurchströmter Katalysator**
Exhaust gas flown through catalytic converter
Catalyseur traversé par le gaz d'échappement

(30) Priorität: 24.06.1999 DE 19928975
(43) Veröffentlichungstag der Anmeldung: 27.12.2000
(73) Patentinhaber: Volkswagen Aktiengesellschaft, 38436 Wolfsburg (DE)
(72) Erfinder: Engeler, Werner, 38527 Meine (DE); Düsterdiek, Thorsten, Dr., 30163 Hannover (DE); Doré, Pascal, 38302 Gifhorn (DE)

(56) Entgegenhaltungen:
- DE-A- 19 607 862
- PATENT ABSTRACTS OF JAPAN vol. 1998, no. 12, 31. Oktober 1998 (1998-10-31) & JP 10 185265 A (NISSHIN STEEL CO LTD;SEKISUI CHEM CO LTD), 14. Juli 1998 (1998-07-14)
- PATENT ABSTRACTS OF JAPAN vol. 1999, no. 02, 26. Februar 1999 (1999-02-26) & JP 10 309438 A (MITSUBISHI MOTORS CORP), 24. November 1998 (1998-11-24)

## Beschreibung

Die Erfindung betrifft einen abgasdurchströmten Katalysator nach dem Oberbegriff des Anspruchs 1.

Ein solcher Katalysator enthält einen Reaktorkörper, dessen Oberfläche photokatalytisch wirksam ist. Um die Katalysereaktion anzuregen, sind in den Reaktorkörper durch seitliche Eintrittsöffnungen Lichtstrahlen mit photokatalytisch wirksamem Spektrum zur Photoaktivierung der katalytischen Reaktion eingekoppelt.

Bei einem solchen Photokatalysator ist es bekannt, eine Erhöhung des Schadstoffumsatzes auch bei niedrigeren Abgastemperaturen (von unter 140 °Celsius) dadurch zu erreichen, daß der Photokatalysator in eine Wirbelschicht überführt wird, die dann von innen und außen beleuchtet ist. Weiter ist es bekannt, eine photokatalytische Umsetzung in einem transparenten Rohr vorzunehmen, das halbseitig mit dem Photokatalysator innenbeschichtet ist, wobei die Bestrahlung durch die nicht beschichtete Seite des Reaktionsrohres erfolgt.

Das Wirbelschichtverfahren ist sehr aufwendig und hat einen eingeschränkten Anwendungsbereich. Insbesondere müssen Vorrichtungen vorgesehen sein zur Erzeugung der Wirbelschicht, die ihrerseits durch besondere Maßnahmen vor der Transportwirkung des den Katalysator durchströmenden Abgases geschützt werden muß.

Ein Reaktionsrohr hat einen relativ geringen Umsetzungsgrad, da lediglich eine geringe Oberfläche zur photokatalytischen Umsetzung zur Verfügung steht. Darüberhinaus ist die photokatalytische Umsetzung aufgrund des gekrümmten Verlaufs der Rohrwandung ungleichmäßig.

JP-A-10 185 265 zeigt eine Dunstabzugshaube, die beim Kochen im Kochdampf enthaltenes Fett auf den photokatalytischen Oberflächen einer Vielzahl von streifenförmigen Filtern aufnimmt, wobei die Filter zur Regeneration um eine jeweilige Achse gedreht werden und die photokatalytisch aktive Oberfläche einer UV-Stahlung ausgesetzt wird, was zu einer Dekomposition des angesammelten Fettes führt.

JP-A-10 309 438 zeigt einen Katalysator für Abgase einer Brennkraftmaschine, wobei der Katalysator eine lichtdurchlässigen, mit einer photokatalytisch aktiven Substanz beschichteten Träger aufweist. Durch Bestrahlung des Trägers mit UV-Licht wird eine photokatalytische Umsetzung der Abgase bewirkt.

Der Erfindung liegt die Aufgabe zugrunde, einen abgasdurchströmten Katalysator der eingangs genannten Art so auszubilden, daß die gesamte Reaktoroberfläche gleichmäßig genutzt und gleichzeitig die Ausbeute der Katalysereaktion bezogen auf die aufgewendete Lichtenergie maximiert ist.

Diese Aufgabe wird durch die Merkmale des Anspruchs 1 gelöst. Bevorzugte Ausgestaltungen der Erfindung sind Gegenstand der Unteransprüche.

Die Erfindung bietet den Vorteil, daß die photokatalytisch wirksame Oberfläche direkt und vollständig von den in den Reaktorkörper eintretenden Lichtstrahlen mit photokatalytisch wirksamem Spektrum belichtet wird. Dazu ist die genannte Oberfläche zu den in die Eintrittsöffnung eintretenden Lichtstrahlen unter spitzem Winkel geneigt. Das eingestrahlte Licht trifft unter diesem Winkel direkt auf die belichtete Oberfläche, dadurch entfallen weitere, bauliche Maßnahmen, beispielsweise Vorrichtungen zur Erzeugung einer Wirbelschicht, um die photokatalytisch wirksamen Bestandteile zu belichten. Dabei beträgt der Neigungswinkel zwischen 1 und 5 Grad. und der Reaktor Körper wird von zwei diametral gegenüber Liegenden Seiten belichtet.

Um eine maximale Ausbeute zu erzielen, sind die einfallenden Lichtstrahlen vorzugsweise parallel. Dann ist die Einfallsrichtung der Lichtstrahlen für alle einfallenden Lichtstrahlen gleich. Gegenüber dieser Einfallsrichtung ist die wirksame Oberfläche unter spitzem Winkel geneigt.

Die Lichtstrahlen können auch nicht parallel zueinander verlaufen. Dann ist die Richtung, gegenüber der die photokatalytisch wirksame Oberfläche unter spitzem Winkel geneigt ist, durch eine Haupteintrittsrichtung der Lichtstrahlen durch die entsprechende Eintrittsöffnung gegeben.

Hierunter ist die über sämtliche durch den Eintrittsschlitz einfallenden Lichtstrahlen räumlich gemittelte Eintrittsrichtung gemeint. Es kann jedoch auch die Richtung verwendet werden, in welcher der Hauptenergieanteil, das heißt der Hauptenergiestrom oder ein großer Anteil des Energiestroms in die Eintrittsöffnungen einfällt.

Dadurch ist stets gewährleistet, daß die Gesamtheit beziehungsweise der Hauptanteil oder zumindest ein großer Anteil der in die Eintrittsöffnung eintretenden Lichtstrahlen genutzt wird.

Der Neigungswinkel der photokatalytisch wirksamen Oberfläche kann in Einfallsrichtung der Lichtstrahlen gesehen gleichbleibend oder auch veränderlich sein. Bevorzugt ist ein gleichbleibender Neigungswinkel, das heißt eine ebene Oberfläche. Dadurch wird die gleichmäßige Verteilung der Lichtenergie auf die Oberfläche des Reaktorkörpers gewährleistet.

Bei veränderlichem Neigungswinkel ist die Oberfläche entweder gekrümmt oder es sind unter verschiedenen Winkeln geneigte Oberflächenabschnitte vorgesehen.

In jedem Fall ist durch die durchgehende Neigung der photokatalytisch wirksamen Oberfläche die gesamte belichtete Oberfläche photokatalytisch wirksam genutzt.

Dadurch wird automatisch eine hohe bis maximale Ausbeute der Katalysereaktion erzielt, und zwar sowohl bezogen auf die insgesamt aufgewendete Lichtenergie als auch bezogen auf die Größe der photokatalytischen Oberfläche. Soweit die photokatalytische Oberfläche nicht durch andere Oberflächen oder Teile des Katalysators verdeckt wird, dürfte die gesamte Reaktoroberfläche ohne weitere konstruktive oder andere Maßnahmen für die Photokatalysereaktion so optimal zu nutzen sein, wie in einer Wirbelschicht.

Der Reaktorkörper besteht vorzugsweise aus in Querrichtung zur Einfallsrichtung der Lichtstrahlen zueinander versetzt angeordneten Reaktorlamellen. Dabei wird eine maximale Ausbeute der eingekoppelten Lichtenergie dadurch erzielt, daß benachbarte Reaktorlamellen sich in Einfallsrichtung der Lichtstrahlen gesehen nicht oder lediglich in vernachlässigbarem Maße überdecken. Dies bedeutet, daß benachbarte Reaktorlamellen sich nicht gegenseitig beschatten. Dadurch wird die gesamte Oberfläche genutzt.

Gleichzeitig ist die Raumausnutzung bei minimaler bis verschwindender Beschattung optimal, wenn benachbarte Reaktorlamellen in Querrichtung zur Einfallsrichtung der Lichtstrahlen aneinandergrenzen.

Dann ist nämlich zwischen den benachbarten Reaktorlamellen in beiden Querrichtungen zur Einfallsrichtung gesehen kein überflüssiger Freiraum, der nicht zur photokatalytischen Umsetzung genutzt würde.

Bevorzugt wird vorgeschlagen, daß benachbarte Reaktorlamellen zu den Lichtstrahlen jeweils um Neigungswinkel mit entgegengesetzten Vorzeichen geneigt sind. Dies ist in hohem Maße effektiv, da der Reaktorkörper von zwei diametral gegenüberliegenden Seiten belichtet ist. In jedem Falle werden bei beidseitiger Beleuchtung des Reaktorkörpers beide Großflächen des Flachmaterials, aus dem der Reaktorkörper aufgebaut sein kann, gleichzeitig beleuchtet. Dadurch ist der Aufbau eines Katalysators mit einer Oberfläche möglich, die hinsichtlich der photokatalytischen Wirkung praktisch keinerlei Totzonen, also keine unbeleuchteten Oberflächenabschnitte aufweist. Dazu kann beispielsweise der Reaktorkörper aus einem zu Reaktorlamellen gefalteten Flachmaterial bestehen. Die Faltung ist dabei lediglich im geometrischen Sinne zu verstehen. Obgleich der Reaktorkörper aus einem Flächenmaterial zusammengefaltet werden kann, wird aber auch vorgeschlagen, daß der Reaktorkörper gegossen ist, aus aneinandergefügten Flachmaterialabschnitten besteht, oder daß der Reaktorkörper monolithisch ist.

Die Reaktorlamellen sind Flächengebilde, deren Oberflächen parallel zur Richtung verlaufen, in der der Katalysator von dem Abgas durchströmt wird .

Bevorzugt ist es, wenn der Querschnitt des Reaktorkörpers in Form einer Dreiecksfunktion gefaltet ist, deren Flanken die Reaktorlamellen bilden. Dabei sind benachbarte Reaktorlamellen jeweils um Neigungswinkel mit entgegengesetzten Vorzeichen geneigt.

Die Erfindung wird anhand von in den Figuren dargestellten Ausführungsbeispielen näher erläutert. Es zeigen:
- Fig.1: einen Querschnitt durch einen erfindungsgemäßen Katalysator mit einem Reaktorkörper, der aus einzelnen und separaten Lamellen besteht,
- Fig.2: die Seitenansicht des Ausführungsbeispiels der Fig.1 in Richtung der Pfeile II gesehen,
- Fig.3: einen Querschnitt durch ein Ausführungsbeispiel mit einem gefalteten Reaktorkörper, der von beiden Seiten belichtet ist,
- Fig.4: die Ansicht des Ausführungsbeispiels der Fig.3 in Richtung der Pfeile IV gesehen.

Sofern im folgenden nichts anderes gesagt ist, beziehen sich alle Bezugszeichen stets auf alle Figuren.

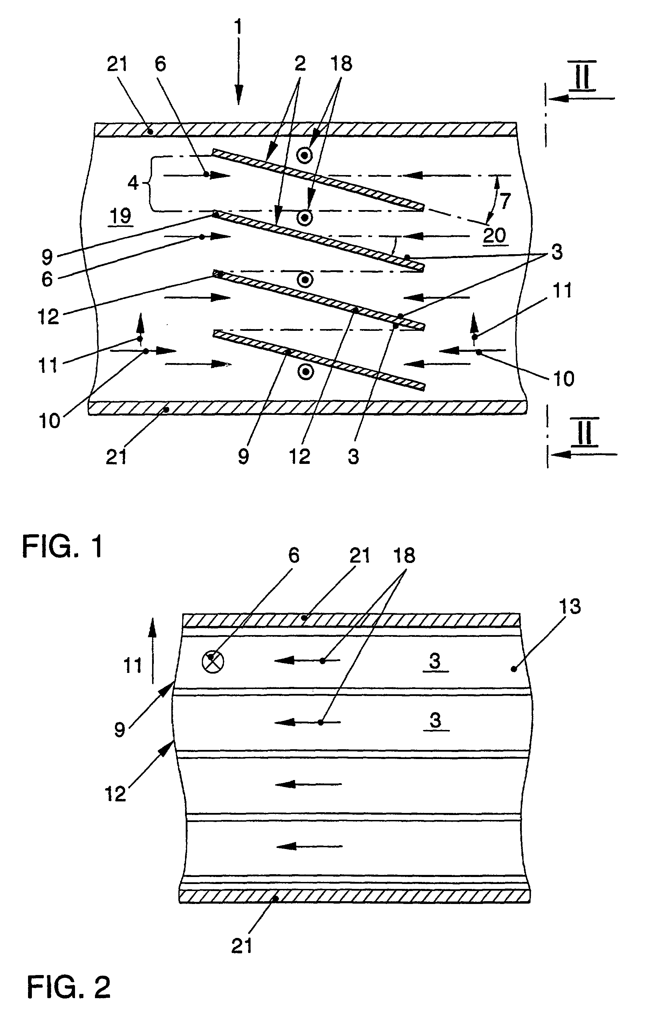

Fig.1 zeigt einen Katalysator 1, der in der gezeigten Durchströmungsrichtung 18 von einem Abgas durchströmt wird. Der Katalysator hat eine Gehäusewandung 21, innerhalb derer ein Reaktorkörper 2 angeordnet ist. Die Oberfläche 3 des Reaktorkörpers 2 ist photokatalytisch wirksam. In den Reaktorkörper ist durch seitliche Eintrittsöffnungen 4 Licht 5 mit photokatalytisch wirksamem Spektrum eingekoppelt. Der Reaktorkörper kann an seiner Oberfläche mit dem photokatalytisch wirksamen Material beschichtet sein. Andernfalls kann auch der Reaktorkörper aus photokatalytisch wirksamem Material bestehen. Hierfür kommt beispielsweise TiO₂ z. B. auch mit zugesetztem Ceolith oder anderen Feststoffen in Betracht, die die photokatalytische Aktivität des Systems gegenüber der umzusetzenden Schadstoffkompnente erhöhen. Das photokatalytisch wirksame Material kann auch als Vollkatalysator in Form eines Monolithen in Betracht kommen.

Das Licht mit photokatalytisch wirksamem Spektrum wird dabei seitlich eingekoppelt. Die photokatalytisch wirksame Oberfläche 3 ist zu den in die Eintrittsöffnung 4 einfallenden Lichtstrahlen 6 unter einem spitzen Winkel 7 geneigt. Der Neigungswinkel ist hier lediglich schematisch angedeutet. Er ist übertrieben gezeigt. Er beträgt vorzugsweise zwischen 1 bis 5 Grad.

Unter diesem Winkel fällt in dem gezeigten Ausführungsbeispiel der Lichtstrahl 6 auf die Oberfläche 3 des Reaktorkörpers 2. Dadurch wird das gesamte eingestrahlte Licht 5 auf die Oberfläche 3 des Reaktorkörpers 2 verteilt. Dabei entspricht die eingestrahlte Lichtenergie pro Flächeneinheit der Oberfläche 3 der Lichtenergie der Flächeneinheit einer Fläche, die senkrecht zur Einstrahlrichtung 10 verläuft, multipliziert mit dem Faktor Sinus des Neigungswinkels 7. Daher kann einerseits durch den Neigungswinkel 7 die einfallende Lichtenergiemenge pro Flächeneinheit der Oberfläche 3 mittels des genannten Zusammenhangs eingestellt werden. Hierzu wird entweder der Neigungswinkel 7 verändert oder die Einstrahlintensität des Lichtes 5.

Andererseits kann durch den Neigungswinkel auch der Anteil der photokatalytisch wirksamen Oberfläche pro Gesamtvolumen des Katalysators festgelegt werden. Die Größe der photokatalytisch wirksamen Oberfläche steigt mit abnehmender Dicke des Reaktorkörpers und mit abnehmendem Neigungswinkel 7.

Es kann daher mit der Erfindung stets ein angemessenes Verhältnis von photokatalytisch wirksamer Oberfläche zu Volumen und damit Volumen beziehungsweise Größe des Katalysators einerseits und eingestrahlter beziehungsweise einzustrahlender Lichtstärke andererseits hergestellt werden.

In Fig.1 ist des weiteren gezeigt, daß der Reaktorkörper 2 aus einzelnen und separaten Reaktorlamellen 9 besteht. Eine Lamelle im erfindungsgemäßen Sinne ist hier ein Flächenabschnitt des Reaktorkörpers 2 mit gleichem Neigungswinkel beziehungsweise mit gleichem Neigungssinn, das heißt mit gleicher Neigungsrichtung bezüglich der Einstrahlrichtung 10. Hierauf wird später noch näher eingegangen.

Benachbarte Reaktorlamellen 9,12 sind in Querrichtung 11 zur Einfallsrichtung 10 der Lichtstrahlen 6 derart gegeneinander verschoben angeordnet, daß sie sich in Einfallrichtung 10 der Lichtstrahlen 6 gesehen nicht überdecken. Es kann aber durchaus eine geringfügige Überdeckung aus geometrischen oder baulichen Gründen stattfinden. Diese ist dann vemachlässigbar, wenn sie lediglich einige Prozent bis maximal 10 Prozent der Gesamtoberfläche nicht überschreitet.

Im gezeigten Ausführungsbeispiel grenzen die benachbarten Reaktorlamellen 9,12 in Querrichtung 11 zur Einfallsrichtung 10 aneinander. Soweit die Einfallsrichtung 10 für alle Lichtstrahlen 6 gleich ist, findet damit keine gegenseitge Beschattung von Reaktorlamellen statt. Dadurch entstehen auch keine unbelichteten und somit photokatalytisch unwirksamen Bereiche.

Der Reaktorkörper 2 ist von zwei sich diametral gegenüberliegenden Seiten 19,20 beleuchtet. Bezogen auf eine Seite 20 (hier könnte ohne Beschränkung der Allgemeinheit auch die gegenüberliegende Seite 19 genannt sein) sind benachbarte Reaktorlamellen 9,12 zu den Lichtstrahlen 6 um Neigungswinkel mit gleichem Vorzeichen geneigt. Dies bedeutet, daß sie um eine Drehachse im gleichen Sinn bezüglich der Einfallsrichtung 10 verdreht sind.

Die Eintrittsöffnungen 4 sind hier parallel zur Durchströmungsrichtung 18 verlaufende Längsschlitze. Sie werden zwischen den Endkanten zweier benachbarter Reaktorlamellen 9,12 aufgespannt. Die Eintrittsöffnungen 4 sind durch die Geometrie des Reaktorkörpers 2 selber gebildet, und zwar durch die Anordnung der einzelnen Reaktorlamellen 9,12, die in Querrichtung 11 zur Einfallsrichtung 10 verschoben sind und somit die genannten Längsschlitze aufspannen.

In Fig.2 ist zu sehen, daß sich die Reaktorlamellen 9,12 nicht oder nur in geringem Maße gegenseitig beschatten. Die einzelnen Reaktorlamellen 9,12 erstrecken sich praktisch in Strömungsrichtung 18, das heißt in Längsrichtung des Katalysators 1. Sie bestehen aus einem Flachmaterial 13.

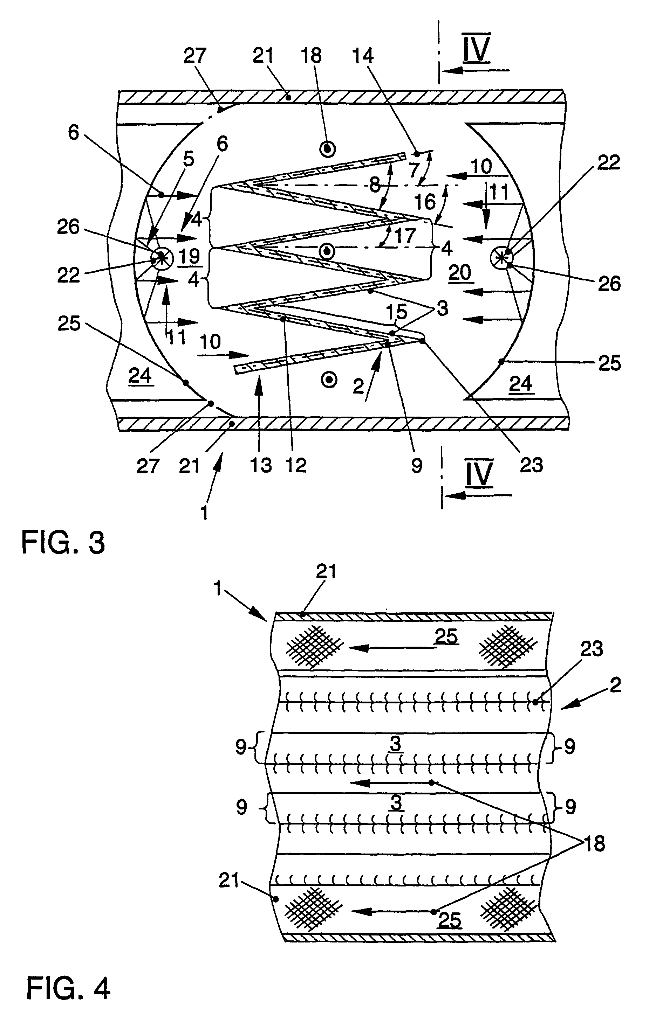

Die Fig.3 und 4, auf die im folgenden Bezug genommen wird, zeigen ein weiteres Ausführungsbeispiel der Erfindung. Hier ist im Inneren des Katalysators 1 ein Reaktorkörper 2 angeordnet, der aus miteinander verbundenen Reaktorlamellen 9 besteht. Er hat einen Querschnitt in Form einer Dreiecksfunktion 14, wobei die Flanken 15 der Dreiecksfunktion 14 die Reaktorlamellen 9 bilden. Der Reaktorkörper 2 besteht aus einem gefalteten Flachmaterial 13.

Unter Faltung im erfindungsgemäßen Sinn ist die geometrische Form zu verstehen. Faltung bedeutet insoweit, daß einzelne, in entgegengesetzte Richtung verlaufende Faltabschnitte gebildet sind. Diese können sowohl aus einem Flachmaterial zusammengefaltet sein. Sie können aber auch ein entsprechend geformter Monolith sein oder ein Gußstück oder zusammengefügte Einzellamellen.

Der Querschnittsverlauf des Reaktorkörpers 2 hat im wesentlichen die Form einer Dreiecksfunktion. Dies bedeutet, daß er nach Art eines Faltenbalges zusammengelegt ist. Er besitzt Faltkanten beziehungsweise Umlenkstellen, an denen sich die Verlaufsrichtung des Querschnitts des Reaktorkörpers 2 um einen Winkelbetrag zwischen 90° und 180° ändert. Dadurch entsteht ein Zickzackförmiger Verlauf. Die einzelnen Faltflächen bilden dabei die Reaktorlamellen 9.

Dadurch sind benachbarte Reaktorlamellen 9,12 zu den Lichtstrahlen 6 jeweils um Neigungswinkel 7,16 mit entgegengesetztem Vorzeichen geneigt.

Auch dieses Ausführungsbeispiel ist von zwei diametral gegenüberliegenden Seiten 19,20 beleuchtet. Die Lichtstrahlen 6, die auf den Reaktorkörper 2 auftreffen, sind im wesentlichen parallel. Es kann auch eine Lichtquelle mit nichtparallelem Licht vorgesehen sein, beispielsweise eine (in Querschnittsrichtung beziehungsweise in Querrichtung 11) langgestreckte, quasi linienförmige Lichtquelle.

Das parallelisierte Licht wird von einer Lichtquelle 22 erzeugt. Es kann sich hierbei um Glühlicht oder auch Spektrallicht handeln. Die Lichtquelle 22 ist seitlich außerhalb des Reaktorkörpers 2 angeordnet.

Es kann auch eine quasi punktförmige Lichtquelle 22 zur Anwendung kommen. Bevorzugt ist aber eine langgestreckte Lichtquelle 22. Zur Parallelisierung ist eine solche quasi punktförmige oder langgestreckte Lichtquelle oder eine Lichtquelle 22 mit räumlicher Ausdehnung - bezogen auf den Katalysator 1 - im Bereich der Brennstelle 26 eines Hohlspiegels 24 angeordnet ist. Die Lichtquelle ist vorzugsweise in der Verlaufsrichtung des Reaktorkörpers 2, das ist die Durchströmungsrichtung 18, langgestreckt ausgebildet. Die Brennstelle in dem gezeigten Querschnitt entspricht somit einer Brennlinie des Hohlspiegels 24. Der Hohlspiegel 24 ist ein geradzylindrischer Hohlspiegel. Zur optimalen Parallelisierung kann der Hohlspiegel einen Parabolquerschnitt aufweisen. In der Regel dürfte aber eine kreis- beziehungsweise kugelförmige Innenkontur ausreichen.

Dadurch sind die Lichtstrahlen 6 weitgehend parallelisiert. Von den Lichtstrahlen 6, die direkt von der Lichtquelle 26 ausgehend auf den Reaktorkörper 2 treffen, ist hier abggesehen.

Anstelle der gezeigten Parabel 27 kann die Spiegel-Zylinderfläche 25 auch einer Parabel angenähert sein oder kreiszylinderabschnittsförmig ausgebildet sein. Dies entspricht näherungsweise der Parabel, so daß ausreichend parallelisiertes Licht entstehen dürfte.

Schließlich zeigt Fig.4 noch die Draufsicht auf das Ausführungsbeispiel der Fig.3 in Richtung der Pfeile IV gesehen. Die einzelnen Reaktorlamellen 9 bilden in der Blickrichtung gesehen von oben nach unten altemierend spitz zulaufende Hohlräume oder Spitzen an deren Enden jeweils die Faltkante 23 verläuft. Die Hohlräume sind im Bereich der schraffiert dargestellt.

### BEZUGSZEICHENLISTE

- 1: Katalysator
- 2: Reaktorkörper
- 3: Oberfläche des Reaktorkörpers
- 4: Seitliche Eintrittsöffnung
- 5: Licht mit photokatalytisch wirksamem Spektrum
- 6: Lichtstrahl
- 7: Neigungswinkel
- 8: Öffnungswinkel
- 9: Reaktorlamelle
- 10: Einfallsrichtung
- 11: Querrichtung zur Einfallsrichtung
- 12: Reaktorlamelle
- 13: Flachmaterial
- 14: Dreiecksfunktion
- 15: Flanke
- 16: Neigungswinkel
- 17: Neigungswinkel
- 18: Durchströmungsrichtung
- 19: Erste Seite
- 20: Diametral gegenüberliegende Seite
- 21: Gehäusewandung
- 22: Lichtquelle
- 23: Faltkante
- 24: Hohlspiegel
- 25: Spiegel-Zylinder-Parabolfläche
- 26: Brennlinie
- 27: Parabelkurve

## Patentansprüche

1. Abgasdurchströmter Katalysator (1), mit einem umströmten Reaktorkörper (2), dessen Oberfläche (3) photokatalytisch wirksam ist und in den durch seitliche Eintrittsöffnungen (4) Licht (5) mit photokatalytisch wirksamem Spektrum eingekoppelt ist, wobei die photokatalytisch wirksame Oberfläche (3) zu den in die Eintrittsöffnungen (4) einfallenden Lichtstrahlen (6) unter spitzem Winkel (7) geneigt ist, **dadurch gekennzeichnet, daß** der Neigungswinkel (7) zwischen 1° bis 5° beträgt und daß der Reaktorkörper (2) von zwei diametral gegenüberliegenden Seiten (19, 20) belichtet ist.

2. Katalysator nach Anspruch 1, **dadurch gekennzeichnet, daß** der Reaktorkörper (2) aus Reaktorlamellen (9) besteht, die in Querrichtung (11) zur Einfallsrichtung (10) der Lichtstrahlen (6) zueinander versetzt angeordnet sind.

3. Katalysator nach Anspruch 2, **dadurch gekennzeichnet, daß** benachbarte Reaktorlamellen (12) sich in Einfallsrichtung (10) der Lichtstrahlen (6) gesehen nicht oder lediglich in vemachlässigbarem Maße überdecken.

4. Katalysator nach Anspruch 3, **dadurch gekennzeichnet, daß** benachbarte Raktorlamellen (9, 12) in Querrichtung (11) zur Einfallsrichtung (10) der Lichtstrahlen (6) aneinandergrenzen.

5. Katalysator nach einem der Ansprüche 2 bis 4, **dadurch gekennzeichnet, daß** benachbarte Reaktorlamellen (9, 12) zu den Lichtstrahlen (6) jeweils um Neigungswinkel (7,17) mit gleichem Vorzeichen geneigt sind.

6. Katalysator nach einem der Ansprüche 2 bis 4, **dadurch gekennzeichnet, daß** benachbarte Reaktorlamellen (9,12) zu den Lichtstrahlen (6) jeweils um Neigungswinkel (7,16) mit entgegengesetzten Vorzeichen geneigt sind.

7. Katalysator nach einem der Ansprüche 2 bis 6, **dadurch gekennzeichnet, daß** separate Reaktorlamellen (9) vorgesehen sind.

8. Katalysator nach einem der Ansprüche 2 bis 6, **dadurch gekennzeichnet, daß** die Reaktorlamellen (9) miteinander verbunden sind.

9. Katalysator nach Anspruch 8, **dadurch gekennzeichnet, daß** der Reaktorkörper (2) aus einem zu Reaktorlamellen (9) gefalteten Flachmaterial (13) besteht.

10. Katalysator nach Anspruch 9, **dadurch gekennzeichnet, daß** der Querschnitt des Reaktorkörpers (2) in Form einer Dreiecksfunktion (14) gefaltet ist, deren Flanken (15) die Reaktorlamellen (9) bilden.

11. Katalysator nach einem der vorangegangenen Ansprüche, **dadurch gekennzeichnet, daß** die Lichtstrahlen (6) senkrecht in die Eintritttsöffnung (4) einfallen.

12. Katalysator nach einem der vorangegangenen Ansprüche, **dadurch gekennzeichnet, daß** die Eintrittsöffnungen (4) parallel zur Durchströmungsrichtung (18) verlaufende Längsschlitze sind.

13. Katalysator nach einem der vorangegangenen Ansprüche, **dadurch gekennzeichnet, daß** eine Lichtquelle (22) seitlich und außerhalb des Reaktorkörpers (2) im Bereich der Brennstelle (26) eines dem Reaktorkörper zugewandten, seitlichen Hohlspiegels (24) angeordnet ist.

14. Katalysator nach Anspruch 13, **dadurch gekennzeichnet, daß** eine langgestreckte Lichtquelle (22) im Bereich der Brennlinie (26) eines geradzylindrischen Hohlspiegels (24) angeordnet ist.

15. Katalysator nach Anspruch 13 oder 14, **dadurch gekennzeichnet, daß** der Hohlspiegel (24) einen Parabolquerschnitt aufweist.

## Claims

1. Catalytic converter (1) with exhaust-gas throughflow, having a flow-around reactor body (2), the surface (3) of which is photocatalytically active and into which light (5) with a photocatalytically active spectrum is fed through lateral entry orifices (4), the photocatalytically active surface (3) being inclined at an acute angle (7) to the light beams (6) incident into the entry orifices (4), **characterized in that** the angle of inclination (7) is between 1° and 5°, and **in that** the reactor body (2) is exposed from two diametrically opposite sides (19, 20).

2. Catalytic converter according to Claim 1, **characterized in that** the reactor body (2) consists of reactor lamellae (9) which are arranged, offset with respect to one another, in the transverse direction (11) to the direction of incidence (10) of the light beams (6).

3. Catalytic converter according to Claim 2, **characterized in that** adjacent reactor lamellae (12) do not overlap or overlap only to a negligible extent, as seen in the direction of incidence (10) of the light beams (6).

4. Catalytic converter according to Claim 3, **characterized in that** adjacent reactor lamellae (9, 12) are contiguous to one another in the transverse direction (11) to the direction of incidence (10) of the light beams (6).

5. Catalytic converter according to one of claims 2 to 4, **characterized in that** adjacent reactor lamellae (9, 12) are inclined to the light beams (6) in each case by angles of inclination (7, 17) having the same sign.

6. Catalytic converter according to one of claims 2 to 4, **characterized in that** adjacent reactor lamellae (9, 12) are inclined to the light beams (6) in each case by angles of inclination (7, 16) having opposite signs.

7. Catalytic converter according to one of claims 2 to 6, **characterized in that** separate reactor lamellae (9) are provided.

8. Catalytic converter according to one of claims 2 to 6, **characterized in that** the reactor lamellae (9) are connected to one another.

9. Catalytic converter according to Claim 8, **characterized in that** the reactor body (2) consists of a flat material (13) folded to form reactor lamellae (9).

10. Catalytic converter according to Claim 9, **characterized in that** the cross section of the reactor body (2) is folded in the form of a triangular function (14), the flanks (15) of which form the reactor lamellae (9).

11. Catalytic converter according to one of the preceding claims, **characterized in that** the light beams (6) are incident into the entry orifice (4) perpendicularly.

12. Catalytic converter according to one of the preceding claims, **characterized in that** the entry orifice (4) are longitudinal slots running parallel to the throughflow direction (18).

13. Catalytic converter according to one of the preceding claims, **characterized in that** a light source (22) is arranged laterally and outside the reactor body (2) in the region of the focal point (26) of a lateral hollow mirror (24) facing the reactor body.

14. Catalytic converter according to Claim 13, **characterized in that** an elongate light source (22) is arranged in the region of the focal line (26) of a straight-cylindrical hollow mirror (24).

15. Catalytic converter according to Claim 13 or 14, **characterized in that** the hollow mirror (24) has a parabolic cross section.

## Revendications

1. Catalyseur (1) traversé par le gaz d'échappement, comprenant un corps de réacteur (2) parcouru par le courant, dont la surface (3) a une action photocatalytique et dans lequel de la lumière (5) avec un spectre à action photocatalytique est injectée à travers des ouvertures d'entrée latérales (4), la surface à action photocatalytique (3) étant inclinée suivant un angle aigu (7) par rapport aux faisceaux lumineux (6) tombant dans les ouvertures d'entrée (4), **caractérisé en ce que** l'angle d'inclinaison (7) est compris entre 1° et 5° et **en ce que** le corps de réaction (2) est éclairé depuis deux côtés diamétralement opposés (19, 20).

2. Catalyseur selon la revendication 1, **caractérisé en ce que** le corps de réaction (2) se compose de lamelles de réacteur (9) qui sont décalées les unes par rapport aux autres dans la direction transversale (11) par rapport à la direction d'incidence (10) des faisceaux lumineux (6).

3. Catalyseur selon la revendication 2, **caractérisé en ce que** les lamelles de réacteur voisines (12), vu dans la direction d'incidence (10) des faisceaux lumineux (6), ne se recouvrent pas ou seulement dans une mesure négligeable.

4. Catalyseur selon la revendication 3, **caractérisé en ce que** des lamelles de réacteur voisines (9, 12) sont juxtaposées dans la direction transversale (11) par rapport à la direction d'incidence (10) des faisceaux lumineux (6).

5. Catalyseur selon l'une quelconque des revendications 2 à 4, **caractérisé en ce que** des lamelles de réacteur voisines (9, 12) sont inclinées avec le même signe à chaque fois suivant l'angle d'inclinaison (7, 17) par rapport aux faisceaux lumineux (6).

6. Catalyseur selon l'une quelconque des revendications 2 à 4, **caractérisé en ce que** des lamelles de réacteur voisines (9, 12) sont inclinées avec un signe différent à chaque fois de l'angle d'inclinaison (7, 16) par rapport aux faisceaux lumineux (6).

7. Catalyseur selon l'une quelconque des revendications 2 à 6, **caractérisé en ce que** l'on prévoit des lamelles de réacteur (9) séparées.

8. Catalyseur selon l'une quelconque des revendications 2 à 6, **caractérisé en ce que** les lamelles de réacteur (9) sont connectées les unes aux autres.

9. Catalyseur selon la revendication 8, **caractérisé en ce que** le corps de réacteur (2) se compose d'un matériau plat (13) plié pour former les lamelles de réacteur (9).

10. Catalyseur selon la revendication 9, **caractérisé en ce que** la section transversale du corps de réacteur (2) est pliée en forme de fonction triangulaire (14) dont les flancs (15) forment les lamelles de réacteur (9).

11. Catalyseur selon l'une quelconque des revendications précédentes, **caractérisé en ce que** les faisceaux lumineux (6) tombent verticalement dans l'ouverture d'entrée (4).

12. Catalyseur selon l'une quelconque des revendications précédentes, **caractérisé en ce que** les ouvertures d'entrée (4) sont des fentes longitudinales s'étendant parallèlement à la direction d'écoulement (18).

13. Catalyseur selon l'une quelconque des revendications précédentes, **caractérisé en ce qu'**une source lumineuse (22) est disposée latéralement et en dehors du corps de réacteur (2) dans la région du foyer (26) d'un miroir concave (24) latéral tourné vers le corps de réacteur.

14. Catalyseur selon la revendication 13, **caractérisé en ce qu'**une source lumineuse (22) étendue longitudinalement est prévue dans la région de l'axe focal (26) d'un miroir concave cylindrique droit.

15. Catalyseur selon la revendication 13 ou 14, **caractérisé en ce que** le miroir concave (24) présente une section transversale parabolique.
